# EUROPEAN PATENT SPECIFICATION

(11) **EP 4 124 442 B1**
(45) Date of publication and mention of the grant of the patent: **09.10.2024**
(21) Application number: 22182766.0
(22) Date of filing: 04.07.2022
(51) Int. Cl.: B29C 64/153, B29C 64/165, B29C 64/205, B29C 64/321, B29C 64/393, B33Y 10/00, B33Y 30/00, B33Y 40/10, B33Y 50/02, B22F 10/28, B22F 12/60

(54) **METHOD AND APPARATUS FOR THE ADDITIVE MANUFACTURE OF A COMPONENT WITHIN A RECEIVING UNIT USING A POWDERY MATERIAL**
VERFAHREN UND VORRICHTUNG ZUR GENERATIVEN FERTIGUNG EINES BAUTEILS INNERHALB EINER AUFNAHMEEINHEIT UNTER VERWENDUUNG EINES PULVERFÖRMIGEN MATERIALS
PROCÉDÉ ET APPAREIL POUR LA FABRICATION ADDITIVE D'UN COMPOSANT À L'INTÉRIEUR D'UNE UNITÉ DE RÉCEPTION À L'AIDE D'UN MATÉRIAU EN POUDRE

(30) Priority: 27.07.2021 DE 102021119465
(43) Date of publication of application: 01.02.2023
(73) Proprietor: Airbus Operations GmbH, 21129 Hamburg (DE)
(72) Inventor: SCHUBERT, Konstantin, 21129 Hamburg (DE); BORN, Johannes, 21129 Hamburg (DE)
(74) Representative: LKGLOBAL Lorenz & Kopf Patentanwalt Attorney at Law PartG mbB

(56) References cited:
- WO-A1-2015/112422
- JP-A- 2017 078 214
- US-A1- 2016 288 265
- US-A1- 2018 333 778

## Description

### Field of the invention

The present invention relates to the additive manufacture of components in powder-based processes. In particular, the present invention relates to a method and an apparatus for the additive manufacture of a component within a receiving unit using a powdery material.

### Background of the invention

Additive manufacturing (AM) of both metal and plastic parts has become more and more widespread in recent years. In the field of plastics in particular, filament-based methods represent a mature manufacturing technology which can be used for the production of complex parts or for what is referred to as rapid prototyping. In some very common technologies for additive manufacturing, what is referred to as a powder bed is used, in which a material is applied in powder form to a printing bed and is then locally solidified, either by melting this material locally or applying a liquid binder thereto or sintering the particles together. In such methods, the powder is applied to the printing bed from a type of powder reservoir and is smoothed by means of a mechanical levelling mechanism, which may comprise rollers or scrapers, for example. The aim is to ensure a very uniform layer thickness. A frequent problem is the adhesion of material to these smoothing devices, leading to unevenness in the unsolidified upper layer thicknesses, which, if it is not detected, may even intensify further during printing. It is therefore usually necessary to coat the rollers or scrapers frequently with a release agent in order to avoid this problem, and this is time-consuming. It is likewise necessary for there to be sufficient space around the build chamber or the powder bed for the rollers or scrapers and the actuating system. It should be noted here that the build volume is normally heated and insulated, and the larger the insulated volume, the more insulating material and energy is required in order to ensure uniform heat distribution. Current powder bed systems also have a specific build volume, which is completely filled with powder, and this often leads to unnecessary consumption of excess powder.

DE 10 2016 219 458 A1 and US 2018 / 0 099 455 A1 describe a method for the additive manufacture of a receiving container for the storage and/or transport of a product. The method comprises three-dimensional detection of the outer shape of the product, creation of a computer-readable data set comprising information about the detected outer shape of the product, and additive manufacturing of the receiving container, wherein a modelling material is deposited in layers, liquefied and hardened in a computer-controlled manner based on the created data set.

JP 2017 078214 A describes a lamination molding apparatus forming a molded object by repeating a step of supplying a powder into a molding tank to form a powder layer and a step of irradiating a predetermined region of the powder layer with a laser beam to sinter or to melt and solidify the layer to form a cured layer in a predetermined shape. The apparatus includes a vibration device configured to be able to impart vibration to the powder layer. Imparting vibration or no vibration by the vibration device is controlled based on a determination whether or not the height of the powder layer reaches the height of a work base set in the molding tank.

US 2016/288265 A1 describes a device for manufacturing a layered object includes a container, a vibration unit, and an energy beam irradiation unit. The container includes a stage, a wall surrounding the stage, and a lid. The vibration unit vibrates raw material powder to planarize a face of the raw material powder supplied into the container. The energy beam irradiation unit irradiates part of the raw material powder with an energy beam to form part of the layered object. The lid presses the raw material powder when the vibration unit vibrates the raw material powder. A space is formed between the wall and the lid in the container when the lid is in contact with the raw material powder. The raw material powder is allowed to flow into the space.

### Description

It can be regarded as one object of the invention to improve the efficiency of powder-based, additive manufacturing processes.

This object is achieved by the subjects of the independent claims. Illustrative embodiments will be found in the dependent claims and the following description.

The method according to the invention can be part of a powder-based or powder bedbased, additive manufacturing process, such as "binder jetting", selective laser sintering, selective laser melting, electron beam melting, etc. It can be applied to all types of base materials, including metal powder or polymer or polymer powder, but also to any other type of powder of any desired shape and size. The oscillation which is applied to the receiving unit and thus to the powdery material located therein ensures that the powder particles of the powdery material are compacted or compressed and/or distributed, with the result that an exposed surface of the powdery material introduced into the receiving unit becomes substantially flat. This distribution takes place, in particular, before the actual processing step in which the powdery material is solidified or hardened in some region or regions. In this case, this solidification is part of the additive printing.

The method according to the invention can avoid mechanical contact between a smoothing device and a layer in which the next printing step is to take place. This means that the method described basically manages without a roller or scraping apparatus for smoothing the exposed surface of the powdery material. This is achieved by the use of oscillations, for example in the form of vibrations, which are introduced into the powder bed either mechanically by an oscillation unit, e.g. by a table vibrator, vibrating table or a similar device, or via sound waves, leading to compression and uniform distribution of the material.

Significant advantages of this method are, inter alia, simpler and less fault-prone distribution apparatuses in comparison with mechanical distribution systems with rollers or scrapers, and automatic avoidance of possible accumulations of faults resulting from the fact that higher-lying material regions on the exposed surface are more likely to be flattened during the distribution phase than lower-lying material regions. In addition, adjustment to new materials and/or powder sizes/types via a change in amplitude, direction and/or frequency of the oscillation excitation is very simple. Likewise, it is advantageously possible to avoid or reduce the use of mechanical parts which come into contact with the powder, and this in turn reduces the wear on insert parts.

The method according to the invention is an additive manufacturing method or part of an additive manufacturing method. In this case, a component is manufactured within a receiving unit, for example using "binder jetting", selective laser sintering, selective laser melting, electron beam melting, etc., wherein the powdery material or powder in the receiving unit is at least partially solidified. This process can take place in layers, with the result that, after a first powder layer has solidified, a second powder layer is introduced into the receiving unit, which is then solidified in turn, etc. The receiving unit can be a tank, container or the like which is open on one side and therefore has, in particular, a pocket-like shape.

Before solidification, the most uniform possible distribution of the powdery material within the receiving unit is achieved by imparting oscillation to the powdery material located in the receiving unit. This can be accomplished, for example, by means of mechanical or acoustic excitation of oscillations. The excitation of oscillations can be applied by way of the receiving unit to the powdery material located therein, in that an oscillation unit connected to the receiving unit causes the receiving unit to oscillate. Likewise, oscillation can be imparted to the receiving unit by means of acoustic sound waves, which are then in turn transmitted to the powdery material located therein. It is also possible to impart oscillation to the powdery material directly by acoustic sound waves, for example by way of loudspeakers which are aligned with the powdery material. It is also possible to provide an additional element which projects into the powdery material and introduces the oscillation into the material.

The oscillation can be maintained over a certain period of time, thus enabling the powdery material to be sufficiently distributed within the receiving unit. In particular, the oscillation is applied over a period of time to the powdery material introduced into the receiving unit until a predetermined distribution of the powdery material within the receiving unit is achieved. As mentioned above, the exposed surface of the powder can be sufficiently smoothed, that is to say sufficiently levelled, before the corresponding parts of the powder solidify, ensuring that the exposed surface has a predetermined flatness. In this case, the exposed surface can form a boundary layer between the uppermost particle layer of the powdery material and the ambient fluid.

According to one embodiment, the predetermined distribution of the powdery material is a measure of a flatness of an exposed surface of the powdery material introduced into the receiving unit.

The predetermined distribution of the powdery material can thus be characterized by a predetermined flatness, which is a measure of a shape tolerance within which the exposed surface must be located. This means, for example, that the predetermined flatness is achieved when accumulations, projections, depressions or furrows on the exposed surface do not exceed a specific threshold value. As soon as this shape tolerance of the exposed surface of the powdery material is considered to be met, the predetermined distribution of the powdery material is achieved and the application of oscillations can be terminated. This is then the end time of the period of time before the predetermined distribution of the powdery material within the receiving unit is achieved. After the predetermined distribution has been achieved, the application of oscillations can be terminated completely or, alternatively, can be continued. In either case, the solidification step can follow after the predetermined distribution has been achieved.

According to one embodiment, the predetermined distribution of the powdery material is a measure of the layer thickness distribution of the powdery material introduced into the receiving unit.

As mentioned above, the introduction of the powdery material and the subsequent solidification can take place in a plurality of steps, wherein, in alternation, a new layer of powder material is introduced, and this layer is then solidified, until finally the entire component has been printed. In the individual steps, in each case specific layer thicknesses of powdery material are introduced into the receiving unit and then distributed until the predetermined distribution for the respective layer to be solidified has been achieved. During this process, the powdery material can be distributed in such a way that the layer thickness of powder material is as uniform as possible. In particular, the predetermined distribution may be achieved when the powder layer does not fall below a minimum layer thickness value at any point and does not exceed a maximum layer thickness value at any point.

According to one embodiment, monitoring takes place, e.g. by means of a monitoring unit, as to whether the powdery material has achieved the predetermined distribution within the receiving unit.

Monitoring can be implemented, for example, by optical, laser-based or acoustic measuring methods. For example, monitoring can be carried out by means of a light barrier or the like, which detects and indicates a deviation or accumulation on the exposed surface of the powdery material and thus a deviation from a predetermined distribution of the material. Such a monitoring unit can thus ensure that no excess material remains above a certain level on the exposed surface. This approach can be combined with other solutions, which can comprise roller smoothing for example, in order to make possible a two-stage powder distribution process in which the vibration step ensures that unevenness is eliminated and optimum compression of the powder is achieved.

According to one embodiment, the oscillation is applied to the powdery material introduced into the receiving unit during and/or immediately after the introduction of the powdery material into the receiving unit.

The powdery material can be introduced into the receiving unit via the feed unit while the oscillation is already being applied to the receiving unit. Alternatively, however, it is possible for the oscillation to be applied to the receiving unit or directly to the powdery material only when the introduction of the material into the receiving unit, at least for the component layer to be solidified next, has been completed.

According to one embodiment, the predetermined distribution of the powdery material within the receiving unit is achieved without using mechanical contact smoothing in the region of an exposed surface of the powdery material introduced into the receiving unit.

It is thus possible to dispense completely with mechanical contact means, such as rollers or scrapers, which come into contact with the exposed surface during smoothing or distribution of the powdery material. This not only reduces the manufacturing time since there is no longer a need to clean such contact means, but also reduces the complexity and thus the susceptibility to faults of the process apparatus as a whole. Distribution of the powder by applying oscillations and the associated contactless smoothing of the exposed surface may take place much more quickly and thus more cost-effectively than contact smoothing of the exposed surface by means of rollers or scrapers.

According to one embodiment, the oscillation is furthermore applied to the powdery material introduced into the receiving unit by means of an oscillation unit coupled to the receiving unit.

In this case, the oscillation unit can have a coupling to the receiving unit which transmits an oscillation generated by the oscillation unit to the receiving unit and to the powdery material located in the receiving unit. The receiving unit can be, for example, a type of powder bed or powder receiving container, parts of the receiving unit, i.e. the powder bed, or even the entire printing apparatus (including the powder bed) being placed on a table vibrator. The table vibrator then makes it possible to distribute the powder material added in a particular step by means of the oscillation or vibration of the powder bed, leading to compression of the powder material and to flattening of any unevenness of the exposed surface. As explained above, this continues until a predetermined distribution of the powder has been achieved, thus allowing subsequent solidification of corresponding parts of the powder material.

According to one embodiment, the oscillation is applied to the powdery material introduced into the receiving unit by means of an acoustic output unit.

This type of oscillation excitation can take place additionally or alternatively to the previously described oscillation unit, that is to say the receiving unit which has been set into oscillation. The acoustic output unit can have a loudspeaker which transmits acoustic sound waves through the ambient fluid to the receiving unit and/or to the powdery material located in the receiving unit. Here, the ambient fluid forms the carrier of the sound waves from the acoustic output unit to the powdery material. The ambient fluid is ambient air, for example.

According to the invention , the oscillation is applied to the powdery material introduced into the receiving unit by means of an oscillation element introduced at least partially into the powdery material.

This oscillation element can be an elongate or rod-shaped element projecting into the powdery material.

All the techniques described herein for applying the oscillation to the powdery material located in the receiving unit can make it possible to apply the oscillations in a locationdependent manner. That is to say that different oscillations or oscillations with different oscillation properties can be applied to different regions of the powdery material located in the receiving unit.

According to one embodiment, a solidified part of the powdery material is fixed within the receiving unit by means of a fixing unit.

In order to avoid a relative movement between the solidified or printed component and the receiving unit during the application of oscillations, fixing of the already printed material can be provided by the fixing unit. In cases in which adhesion to a base plate of the receiving unit cannot be achieved, fixing can be achieved in various possible ways. Possibilities that may be considered are structured base plates and/or structured elements which are secured on the base plate of the receiving unit, needles and/or pins which extend into the desired build space of the receiving unit, base plate extensions in the form of templates, which fix the lower part(s) of the structure of the printed component, or lateral fixing pins and/or needles, which can also be attached to the receiving unit at higher layer levels in order to fix the printed component. The possibilities mentioned can also be used in combination with a special support structure which is produced during the printing process. Examples of such fixings are explained even more clearly in the description of the figures.

According to one embodiment, an insert volume is introduced into the receiving unit, wherein the insert volume is arranged in a first region within the receiving unit, which region differs from a second region, in which the part of the powdery material to be solidified is arranged.

In this way, the use of powdery material can be considerably reduced since large parts of the insert volume occupy the interior of the receiving unit and leave unoccupied essentially only that interior space of the receiving unit in which the component is to be manufactured. This relationship too will be clearer in the description of figures.

According to one aspect of the invention, an apparatus for the additive manufacture of a component within a receiving unit using a powdery material is indicated. The apparatus comprises a feed unit, which is designed to introduce the powdery material into the receiving unit. The apparatus further comprises an oscillation unit, which is designed to apply an oscillation to the powdery material introduced into the receiving unit, as well as a control unit, which is designed to monitor a current distribution of the powdery material introduced into the receiving unit and to maintain the oscillation applied to the powdery material introduced into the receiving unit over a period of time until the current distribution of the powdery material within the receiving unit has achieved a predetermined distribution of the powdery material within the receiving unit. The apparatus also comprises a solidification unit, which is designed to solidify at least a part of the powdery material within the receiving unit after the predetermined distribution of the powdery material within the receiving unit has been achieved.

All the features and properties described with reference to the method can also apply to the apparatus. Accordingly, the apparatus can also comprise, inter alia, the monitoring unit, the fixing unit, the insert volume, etc., with the properties described above and below.

### Brief description of the figures

Fig. 1A, provided for explanation only, shows an apparatus having an oscillation unit for distributing a powdery material.
Fig. 1B, provided for explanation only, shows an apparatus having an oscillation unit for distributing a powdery material.
Fig. 2A, provided for explanation only, shows an apparatus having an oscillation unit during feeding of powdery material.
Fig. 2B, provided for explanation only, shows an apparatus having an oscillation unit after feeding of powdery material.
Fig. 2C, provided for explanation only, shows an apparatus having an oscillation unit after distribution of a powdery material.
Fig. 3, provided for explanation only, shows a manufacturing process in an apparatus for the additive manufacture of a component.
Fig. 4, provided for explanation only, shows an apparatus having an acoustic output unit for distributing a powdery material.
Fig. 5A, provided for explanation only, shows a fixing device for fixing an additively manufactured component on a receiving unit.
Fig. 5B, provided for explanation only, shows a fixing device for fixing an additively manufactured component on a receiving unit.
Fig. 5C, provided for explanation only, shows a fixing device for fixing an additively manufactured component on a receiving unit.
Fig. 5D, provided for explanation only, shows a fixing device for fixing an additively manufactured component on a receiving unit.
Fig. 5E, provided for explanation only, shows a fixing device for fixing an additively manufactured component on a receiving unit.
Fig. 5F, provided for explanation only, shows a fixing device for fixing an additively manufactured component on a receiving unit.
Fig. 6A, provided for explanation only, shows an insert volume arranged in a receiving unit.
Fig. 6B, provided for explanation only, shows an insert volume arranged in a receiving unit.
Fig. 6C, provided for explanation only, shows an insert volume arranged in a receiving unit.
Fig. 6D, provided for explanation only, shows an insert volume arranged in a receiving unit.
Fig. 7, provided for explanation only, shows a flow chart for a method for the additive manufacture of a component within a receiving unit using a powdery material.

### Detailed description of exemplary embodiments

The illustrations in the figures are schematic and not to scale.

If the same reference signs are used in various figures in the following description of the figures, they designate identical or similar elements. However, identical or similar elements may also be designated by different reference signs.

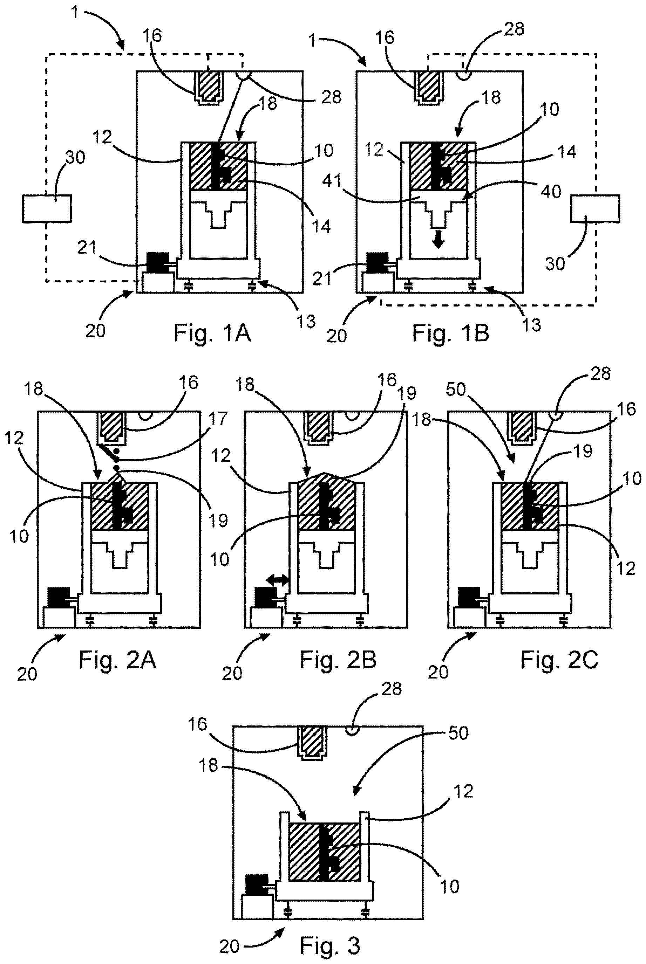

Figures 1A and 1B show an apparatus 1 having an oscillation unit 20 for distributing a powdery material 14. The apparatus 1 is an apparatus 1 for the additive manufacture of a component 10 within a receiving unit 12 in the form of a powder bed 12 using the powdery material 14. The apparatus 1 comprises a feed unit 16, which introduces the powdery material 14 into the receiving unit 12 or feeds it to the latter. As illustrated, the feed unit 16 can be arranged above the receiving unit 12, such that the powdery material 14 falls from above into a collecting container of the receiving unit 12. The apparatus 1 also has an oscillation unit 20, which applies an oscillation to the powdery material 14 introduced into the receiving unit 12. The oscillation unit 20 has a drive motor 21, which transmits the oscillation directly to the receiving unit 12 in the form of a forward and backward movement or a vibration, with the result that ultimately oscillation or vibration is imparted to the powdery material 14. The receiving unit 12 can comprise a type of floating mounting, for example a spring mounting 13. The oscillation can take place in all spatial directions, can have a specific amplitude or deflection, can have a specific frequency and can take place over a predetermined period of time. These oscillation parameters are set or specified by means of a control unit 30. The control unit 30 can be part of the apparatus 1 and is designed to receive various input variables which serve as the basis for setting the said parameters. In particular, the control unit 30, which is designed to monitor a current distribution of the powdery material 14 introduced into the receiving unit 12 and to maintain the oscillation on the powdery material 14 introduced into the receiving unit 12 over a period of time until the current distribution of the powdery material 14 within the receiving unit 12 has achieved a predetermined distribution of the powdery material 14 within the receiving unit 12. The apparatus 1 also comprises a solidification unit 28, which is designed to solidify at least a part of the powdery material 14 within the receiving unit 12 after the predetermined distribution of the powdery material 14 within the receiving unit 12 has been achieved.

The component 10 is additively manufactured in the receiving unit 12, that is to say is generated in a three-dimensional printing process. This 3D printing takes place via a plurality of steps, wherein, in one step, the powdery material 14, that is to say the powder 14, is introduced into the receiving unit 12, the powder 14 is distributed in a subsequent step, and, in a further subsequent step, a part of the powder 14 is solidified by means of the solidification unit 28, for example by laser sintering. This sequence of steps can be repeated over a plurality of iterations, with the result that the component 10 is ultimately generated or printed in layers.

Here, the predetermined distribution of the powdery material 14 is a measure of a flatness of an exposed surface 18 of the powdery material 14 introduced into the receiving unit 12. As shown in Figures 1A and 1B, the exposed surface 18 forms the respective uppermost interface between the powdery material 14 and an ambient fluid in the apparatus 1.

Fig. 1B also shows a movement device 40, which can move a base plate 41 of the receiving unit 12 upwards or downwards. In the course of the manufacturing process, the base plate 41 can thus be lowered (indicated by arrow) in order to provide a further receiving space within the receiving unit 12 in the region of the exposed surface 18 of the powder 14, thus enabling further material layers to be fed in and solidified in order in this way to successively manufacture the component 10. The movement device 40 can also define a layer height of the powder material 14, thus enabling excess powder material 14 to be shaken, as it were, over the edge of the receiving unit 12, while in the case of exemplary embodiments without a movement device 40 (cf. for example Fig. 3 below) the material metering would have to be carried out with sufficient accuracy and a laser focus of the solidification unit 28, etc., would have to compensate for the difference in height.

Figures 2A, 2B and 2C show the apparatus 1 during a manufacturing process of the component 10. Here, part of the component 10 has already been manufactured. It can be seen in Fig. 2A that, in one step, the powdery material 14 is introduced into the receiving unit 12 via the feed unit 16, wherein individual material quantities 17 are poured onto powder 14 already located in the receiving unit 12. As illustrated, this results in local accumulations 19 of the powdery material 14, which lead to unevenness on the exposed surface 18. Powder material 14 falling over the edges of the receiving unit 12 can be collected and made available again to the feed unit 16.

In a further step, which is represented by Fig. 2B, the oscillation unit 20 introduces oscillations or vibrations into the powdery material 14, with the result that the accumulations 19 of the powdery material 14 at the exposed surface 18 are at least partially distributed and thus continuous levelling of the exposed surface 18 is achieved.

Fig. 2C now shows a state in which a predetermined distribution 50 of the powdery material 14 within the receiving unit 12 has already been achieved. The application of the oscillation to the powdery material 14 introduced into the receiving unit 12 thus takes place over a period of time until this predetermined distribution 50 of the powdery material 14 within the receiving unit 12 is achieved. The achievement of this predetermined distribution 50 is characterized in that only very small or no more accumulations 19 are present on the exposed surface 18. The predetermined distribution 50 is representative of a certain flatness of the exposed surface 18. That is to say that deviations from a plane forming the exposed surface 18 no longer exceed a specified threshold value. As mentioned above, a current distribution is monitored by the control unit 30 (cf. Figures 1A and 1B). In this case, monitoring is carried out as to whether the powdery material 14 within the receiving unit 12 has achieved the predetermined distribution 50. In other words, when the current distribution of the powder 14 has achieved the predetermined distribution 50 of the powder 14 on the exposed surface 18, then the application of oscillations by the oscillation unit 20 can be terminated and subsequently the solidification of a corresponding part of the powder 14 can be carried out by means of the solidification unit 28, as illustrated in Fig. 2C. The predetermined distribution 50 of the powdery material 14 within the receiving unit 12 can thus be achieved without using mechanical contact smoothing in the region of an exposed surface 18 of the powdery material 14 introduced into the receiving unit 12.

Fig. 3 shows a manufacturing step in the apparatus 1 for the additive manufacture of the component 10. As can be seen, the receiving unit 12 is not completely filled with powder 14. The component 10 is manufactured in layers. As illustrated, the solidification unit 28 is used for solidification here. In the case of laser sintering, a laser beam impinges on the regions of the exposed surface 18 to be solidified in order to generate the component 10. In this case, solidification does not take place until the predetermined distribution 50 has been achieved before each solidification step.

Figs 1A to 3 each show the oscillation unit 20, which is configured in the form of a table vibrator or vibrating table. Instead of using a table vibrator or vibrating table for the entire powder bed 12, a vibrating rod (or some other vibrating element) can be introduced into the powder 14 for a similar effect, with applicability potentially depending on the material used. The oscillation or vibration may also be introduced only into certain parts or certain regions of the powder bed 12, depending on the specific mechanics. For example, the oscillation may be introduced only into the base plate 41 (cf. Fig. 1B), directly via the base plate 41 or via its movement mechanisms. Means can be provided for preventing the propagation of the oscillations to other parts of the apparatus 1. Decoupling of the vibrating parts, such as the receiving unit 12, from the non-vibrating parts can be achieved, for example, by means of suitable springs and dampers, or by the implementation of a structure in which vibrating parts and non-vibrating parts are mounted independently of one another. For example, the housing which carries the material supply or the feed unit 16 and a power source (not illustrated), can be mounted on the floor and decoupled from the vibrating printing bed 12.

Alternatively, it is also possible to use sound waves to achieve the abovementioned distribution effect, the oscillations being introduced via the fluid medium surrounding the powder 14, or the fixed structure of the receiving unit 12 being excited by the sound waves. The powder 14 can be mixed with a liquid to produce a slurry and to improve sound transmission and behaviour under vibration.

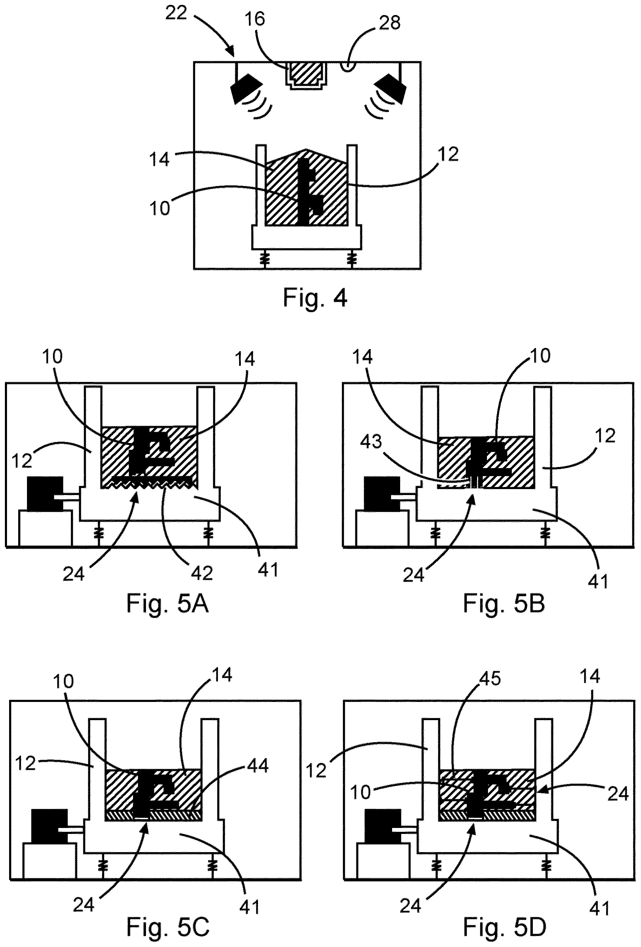

Fig. 4 shows the apparatus 1 having an acoustic output unit 22 for distributing a powdery material 14 instead of the oscillation unit 20. Here, therefore, the application of the oscillation to the powdery material 14 introduced into the receiving unit 12 is accomplished by means of an acoustic output unit 22. However, the oscillation unit 20 can also be used in addition or in an auxiliary capacity, as illustrated in Figures 1A to 3. All other components of the apparatus 1 can be configured as described above.

In the above-described approaches for achieving the predetermined distribution 50 of the powder 14, the exciter frequency, amplitude and direction can be changed by means of a suitable construction, placement and/or mounting and control of the exciter unit or oscillation unit. This applies both to the mechanical excitation by, for example, a table vibrator, which is based on mass movement, and to excitation by pressure waves or sound waves, which are generated, for example, by way of a loudspeaker system, it being possible to modulate both approaches in such a way that they best correspond to the material used and the desired effect. The parameters used can be adapted not only to the material 14 used, but also to the shape of the receiving unit 12 in which it is distributed (e.g. types/forms of powder, size distribution, desired layer thicknesses, etc.). It is possible with the aid of a light barrier to ensure that no excess material remains above a certain level on the exposed surface 18. These approaches for distributing the powder 14 can be combined with mechanical contact smoothing solutions, such as roller smoothing, in order to make possible a two-stage powder distribution process in which the vibration step ensures that unevenness is eliminated and/or optimum compression of the powder 14 is achieved.

Figures 5A to 5F show various fixing devices 24 for fixing the additively manufactured component 10 on a receiving unit 12. In order to avoid a relative movement between the solidified or printed component 10 and the receiving unit 12 during the application of oscillations, fixing of the already printed component material 10 can be ensured by the fixing unit 24. In cases in which adhesion to a base plate 41 of the receiving unit 12 cannot be achieved, fixing can be achieved in various possible ways.

Fig. 5A shows a structured base plate 41 with structured elements 42 such as, for example, grooves or slots, which are provided on the base plate 41 of the receiving unit 12 and which can engage with complementary ribs on the component 10 in order to fix the component 10.

Fig. 5B shows needles 43 and/or pins 43 which extend into the desired build space of the receiving unit 12 and on which the already produced part of the component 10 can be fixed.

Fig. 5C shows a base plate extension 44 in the form of a template, which fixes the lower part(s) of the structure of the printed component 10. In this case, the base plate extension 44 in the form of a template forms a widened or thickened portion of the base plate 41, which, however, has cutouts in the region of the component 10 which is to be printed or has already been printed.

Fig. 5D shows lateral fixing pins 45 and/or needles 45, which can also be attached to the receiving unit 12 at higher layer levels at a distance from the base plate 41 in order to fix the printed component 10.

The possibilities mentioned can also be used in combination with a special support structure which is produced during the printing process.

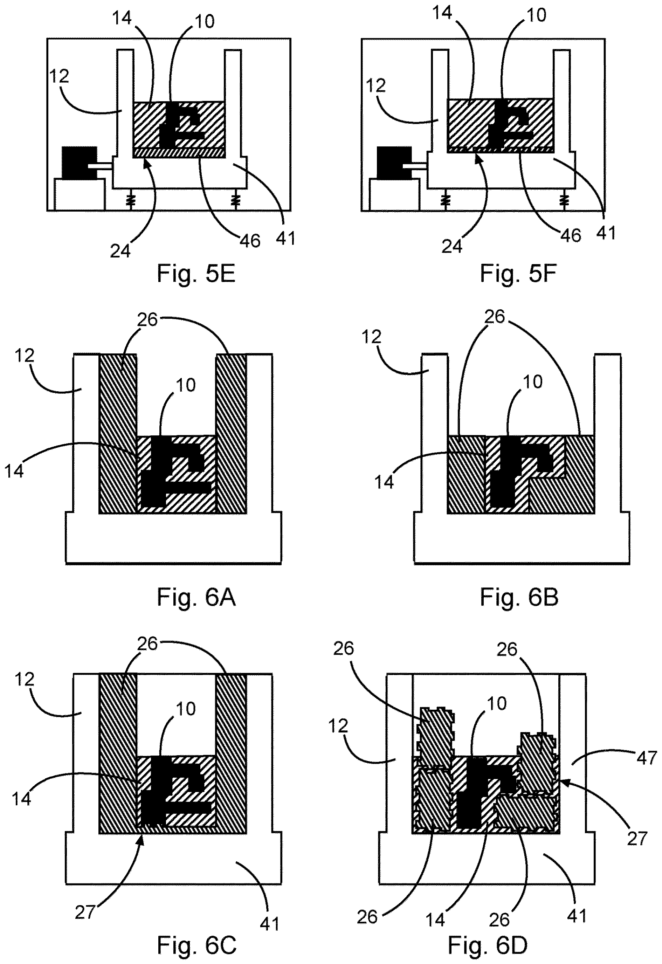

Another possibility of keeping the printed component 10 connected to the base plate 41 during printing, in particular during the vibration phases, is illustrated in Figures 5E and 5F. In this case, the fixing unit 24 can have a prefabricated insert 46 or an inlay 46, which can be, for example, printed, cast, milled and is mounted on the printing base plate 41. Mounting can take place via any desired connection, for example positive or nonpositive as well as adhesive bonding, etc., which ensures that the structure 10 which is printed thereon has a good connection to the rigid parts of the receiving unit 12. The powder material 14 can be selected in such a way that printing of these inlays 46 with a good connection between the inlay 46 and the printed component 10 is ensured, and this can be achieved by a suitable choice of material.

Figures 6A to 6D each show an insert volume 26, which is arranged in the receiving unit 12, wherein the insert volume 26 is arranged in a first region within the receiving unit 12, which region differs from a second region, in which the part of the powdery material 14 to be solidified, i.e. the subsequent component 10, is arranged.

In other words, the apparatus 1 can be used to reduce the build volume in a simple way in order to save on powder material 14, for example if only a small or low partial quantity of the powder material 14 is printed or if the shape of the subsequent component 10 leads to large regions of the receiving unit 12 being virtually unused. For this purpose, a build volume enclosure in the form of the insert volume 26 can be used. The insert volume 26 can be regarded as a type of volume filler. This can be a plurality of modular insert volumes 26 with different sizes and shapes, as illustrated in Fig. 6D. This enables the build volume for the subsequent component 10 to be adapted in a flexible manner. Metal or plastic parts can be used as insert volumes 26, which can be produced by 3D printing, milling or similar methods and can be reused for various component versions. Both standard sizes for producing a specified smaller build volume, and sizes which are adapted to a specific print type and optimize the effective build volume in order to minimize powder consumption are possible. In scraping or roller systems for contact smoothing, these insert volumes 26 would collide with the corresponding mechanism. However, the oscillation application techniques disclosed herein render this problem obsolete.

Different types of shapes can be provided for the insert volume 26, and they can be combined with fixings, base plate adaptations, etc. (see Figures 5A to 5F). In one example, the oscillation unit 20 is installed or integrated into one of these insert volumes 26, or the oscillation can be coupled into the receiving unit 12 and thus into the powdery material 14 via these insert volumes 26.

As shown in Fig. 6D, the insert volumes 26 can have a connection system 27, e.g. positive engagement, which is achieved by the structuring of surfaces of the insert volumes 26 or by holes for connecting them to one another, allowing the use of a number of standard shapes, which can be combined as required. This connection system 27 can also be provided on the base plate 41 or on the sides 47 of the receiving unit 12 in order to allow the coupling of the insert volumes 26 and to avoid movements during printing and during the vibrations.

According to one example, the insert volume 26 illustrated in Figures 6A to 6D can be produced or printed simultaneously with the component. In this case, the manufacture of the insert volume 26 or of the insert volumes 26 can take place in layers. For example, in the case of series manufacture, the insert volume 26 could be printed in the first pass, to be precise next to the first component 10 to be manufactured. In other words, the insert volume 26 is also printed in the first pass and remains in the receiving unit 12 for all further passes. Thus, the volume 26 is solidified or sintered in the first pass around the target geometry of the component 10 in such a way that only a small region around the component geometry to be printed remains free, and the insert volume 26 then remains in the 3D printer for all further passes. This can be automated on the software side, for example by way of the control unit 30 (cf. Figures 1A and 1B).

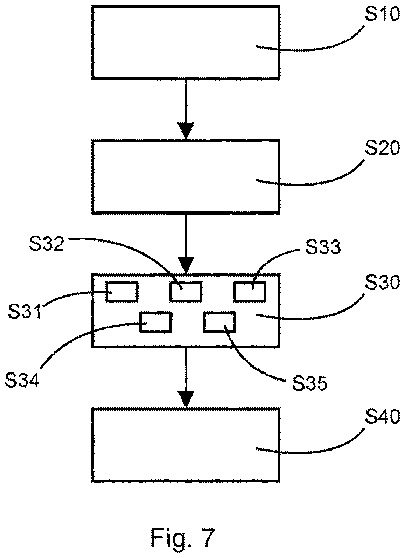

Fig. 7 shows a flow chart for a method for the additive manufacture of a component 10 within a receiving unit 12 using a powdery material 14. In one step S10 of the method, the powdery material 14 is introduced into the receiving unit 12 via a feed unit 16. In a further step S20, an oscillation is applied to the powdery material 1 introduced into the receiving unit 12. In a further step S30, the oscillation is applied over a period of time to the powdery material 14 introduced into the receiving unit 12 until a predetermined distribution 50 of the powdery material 14 within the receiving unit 12 is achieved. In a further step S40, at least a part of the powdery material 14 within the receiving unit 12 is solidified after the predetermined distribution 50 of the powdery material 14 has been achieved.

The steps mentioned can be carried out in the sequence indicated. It is also possible to provide further optional steps. In a further step S31, the oscillation can, for example, be applied to the powdery material 14 introduced into the receiving unit 12 during and/or immediately after the introduction of the powdery material 14 into the receiving unit 12. In a further step S32, the oscillation can be applied to the powdery material 14 introduced into the receiving unit 12 by means of an oscillation unit 20 coupled to the receiving unit 12. In a further step S33, the oscillation can be applied to the powdery material 14. introduced into the receiving unit 12 by means of an acoustic output unit 22. In a further step S34, the oscillation can be applied to the powdery material 14 introduced into the receiving unit 12 by means of an oscillation element introduced at least partially into the powdery material 14. In a further step S35, monitoring is carried out, for example, as to whether the powdery material 14 within the receiving unit 12 has achieved the predetermined distribution 50.

## Claims

1. Method for the additive manufacture of a component (10) within a receiving unit (12) using a powdery material (14) comprising:
introducing the powdery material (14) into the receiving unit (12, S10) via a feed unit (16);
applying an oscillation to the powdery material (14, S20) introduced into the receiving unit (12);
applying the oscillation over a period of time to the powdery material (14) introduced into the receiving unit (12) until a predetermined distribution (50) of the powdery material (14) within the receiving unit (12, S30) is achieved;
solidifying at least a part of the powdery material (14) within the receiving unit (12) after the predetermined distribution (50) of the powdery material (14) within the receiving unit (12, S40) has been achieved,
the method being **characterized in that** it comprises applying the oscillation (S34) to the powdery material (14) introduced into the receiving unit (12) by means of an oscillation element introduced at least partially into the powdery material (14).

2. Method according to Claim 1,
wherein the predetermined distribution (50) of the powdery material (14) is a measure of a flatness of an exposed surface (18) of the powdery material (14) introduced into the receiving unit (12).

3. Method according to any of the preceding claims,
wherein the predetermined distribution (50) of the powdery material (14) is a measure of a layer thickness distribution of the powdery material (14) introduced into the receiving unit (12).

4. Method according to any of the preceding claims, further comprising:
monitoring whether the powdery material (14) within the receiving unit (12) has achieved the predetermined distribution (50) (S35).

5. Method according to any of the preceding claims, further comprising:
applying the oscillation to the powdery material (14) introduced into the receiving unit (12) during and/or immediately after the introduction of the powdery material (14) into the receiving unit (12, S31).

6. Method according to any of the preceding claims,
wherein the predetermined distribution (50) of the powdery material (14) within the receiving unit (12) is achieved without using mechanical contact smoothing in the region of an exposed surface (18) of the powdery material (14) introduced into the receiving unit (12).

7. Method according to any of the preceding claims, further comprising:
applying the oscillation to the powdery material (14) introduced into the receiving unit (12) by means of an oscillation unit (20, S32) coupled to the receiving unit (12).

8. Method according to any of the preceding claims, further comprising:
applying the oscillation to the powdery material (14) introduced into the receiving unit (12) by means of an acoustic output unit (22, S33).

9. Method according to any of the preceding claims, further comprising:
fixing a solidified part of the powdery material (14) within the receiving unit (12) by means of a fixing unit (24, S50).

10. Method according to any of the preceding claims, further comprising:
introducing an insert volume (26) into the receiving unit (12), wherein the insert volume (26) is arranged in a first region within the receiving unit (12), which region differs from a second region, in which the part of the powdery material (14) to be solidified is arranged (S 1).

11. Apparatus (1) for the additive manufacture of a component (10) within a receiving unit (12) using a powdery material (14), comprising:
a feed unit (16), which is designed to introduce the powdery material (14) into the receiving unit (12);
an oscillation element, which is designed to apply oscillation to the powdery material (14) introduced into the receiving unit (12);
a control unit (30), which is designed to monitor a current distribution of the powdery material (14) introduced into the receiving unit (12) and to maintain the oscillation on the powdery material (14) introduced into the receiving unit (12) over a period of time until the current distribution of the powdery material (14) within the receiving unit (12) has achieved a predetermined distribution (50) of the powdery material (14) within the receiving unit (12);
a solidification unit (28), which is designed to solidify at least a part of the powdery material (14) within the receiving unit (12) after the predetermined distribution (50) of the powdery material (14) within the receiving unit (12) has been achieved,
**characterized in that** the oscillation element is configured to be introduced at least partially into the powdery material (14).

## Patentansprüche

1. Verfahren zur additiven Fertigung einer Komponente (10) in einer aufnehmenden Einheit (12) unter Verwendung eines Pulvermaterials (14), umfassend:
Einführen des Pulvermaterials (14) in die aufnehmende Einheit (12, S10) über eine Zuführeinheit (16);
Anwenden einer Schwingung an das in die aufnehmende Einheit (12) eingeführte Pulvermaterial (14, S20);
Anwenden der Schwingung über einen Zeitraum an das in die aufnehmende Einheit (12) eingeführte Pulvermaterial (14), bis eine vorgegebene Verteilung (50) des Pulvermaterials (14) in der aufnehmenden Einheit (12, S30) erzielt ist;
Verfestigen wenigstens eines Teils des Pulvermaterials (14) in der aufnehmende Einheit (12) nachdem die vorgegebene Verteilung (50) des Pulvermaterials (14) in der aufnehmenden Einheit (12, S40) erzielt worden ist,
wobei das Verfahren **dadurch gekennzeichnet ist, dass** es Anwenden der Schwingung (S34) an das in die aufnehmende Einheit (12) eingeführte Pulvermaterial (14) mithilfe eines Schwingelements, das wenigstens teilweise in das Pulvermaterial (14) eingeführt ist, umfasst.

2. Verfahren gemäß Anspruch 1,
wobei die vorgegebene Verteilung (50) des Pulvermaterials (14) ein Maß einer Flachheit einer freiliegenden Oberfläche (18) des in die aufnehmende Einheit (12) eingeführten Pulvermaterials (14) ist.

3. Verfahren gemäß einem der vorstehenden Ansprüche, wobei die vorgegebene Verteilung (50) des Pulvermaterials (14) ein Maß einer Schichtdickenverteilung des in die aufnehmende Einheit (12) eingeführten Pulvermaterials (14) ist.

4. Verfahren gemäß einem der vorstehenden Ansprüche, ferner umfassend:
Überwachen, ob das Pulvermaterial (14) in der aufnehmenden Einheit (12) die vorgegebene Verteilung (50) erreicht hat (S35).

5. Verfahren gemäß einem der vorstehenden Ansprüche, ferner umfassend:
Anwenden der Schwingung an das in die aufnehmende Einheit (12) eingeführte Pulvermaterial (14) während des und/oder unmittelbar nach dem Einführen des Pulvermaterials (14) in die aufnehmende Einheit (12, S31).

6. Verfahren gemäß einem der vorstehenden Ansprüche, wobei die vorgegebene Verteilung (50) des Pulvermaterials (14) in der aufnehmenden Einheit (12) ohne die Verwendung von mechanischem Kontaktglätten in dem Bereich einer freiliegenden Oberfläche (18) des in die aufnehmende Einheit (12) eingeführten Pulvermaterials (14) erzielt wird.

7. Verfahren gemäß einem der vorstehenden Ansprüche, ferner umfassend:
Anwenden der Schwingung an das in die aufnehmende Einheit (12) eingeführte Pulvermaterial (14) mithilfe einer Schwingeinheit (20, S32), die an die aufnehmende Einheit (12) gekoppelt ist.

8. Verfahren gemäß einem der vorstehenden Ansprüche, ferner umfassend:
Anwenden der Schwingung an das in die aufnehmende Einheit (12) eingeführte Pulvermaterial (14) mithilfe einer akustischen Ausgabeeinheit (22, S33).

9. Verfahren gemäß einem der vorstehenden Ansprüche, ferner umfassend:
Fixieren eines verfestigten Teils des Pulvermaterials (14) in der aufnehmenden Einheit (12) mithilfe einer Fixiereinheit (24, S50).

10. Verfahren gemäß einem der vorstehenden Ansprüche, ferner umfassend:
Einführen eines Einlagevolumens (26) in die aufnehmende Einheit (12), wobei das Einlagevolumen (26) in einem ersten Bereich in der aufnehmenden Einheit (12) angeordnet ist, welcher Bereich von einem zweiten Bereich verschieden ist, in dem der Teil des Pulvermaterials (14), der verfestigt werden soll, angeordnet ist (S1).

11. Vorrichtung (1) zur additiven Fertigung einer Komponente (10) in einer aufnehmenden Einheit (12) unter Verwendung eines Pulvermaterials (14), umfassend:
eine Zuführeinheit (16), die dafür gestaltet ist, das Pulvermaterial (14) in die aufnehmende Einheit (12) einzuführen;
ein Schwingelement, das dafür ausgelegt ist, Schwingung an das in die aufnehmende Einheit (12) eingeführte Pulvermaterial (14) anzuwenden;
eine Steuereinheit (30), die dafür gestaltet ist, eine aktuelle Verteilung des in die aufnehmende Einheit (12) eingeführten Pulvermaterials (14) zu überwachen und Schwingung an dem in die aufnehmende Einheit (12) eingeführten Pulvermaterial (14) über einen Zeitraum aufrechtzuhalten, bis die aktuelle Verteilung des in die aufnehmende Einheit (12) eingeführten Pulvermaterials (14) eine vorgegebene Verteilung (50) des in die aufnehmende Einheit (12) eingeführten Pulvermaterials (14) erreicht hat;
eine Verfestigungseinheit (28), die dafür gestaltet ist, wenigstens einen Teil des Pulvermaterials (14) in der aufnehmenden Einheit (12) zu verfestigen, nachdem die vorgegebene Verteilung (50) des Pulvermaterials (14) in der aufnehmenden Einheit (12) erzielt worden ist, **dadurch gekennzeichnet, dass** das Schwingelement dafür gestaltet ist, wenigstens teilweise in das Pulvermaterial (14) eingeführt zu werden.

## Revendications

1. Procédé de fabrication additive d'un composant (10) à l'intérieur d'une unité de réception (12) à l'aide d'un matériau en poudre (14) comprenant :
l'introduction du matériau en poudre (14) dans l'unité de réception (12, S10) par l'intermédiaire d'une unité d'alimentation (16) ;
l'application d'une oscillation au matériau en poudre (14, S20) introduit dans l'unité de réception (12) ;
l'application de l'oscillation pendant un certain temps au matériau en poudre (14) introduit dans l'unité de réception (12) jusqu'à ce qu'une distribution prédéterminée (50) du matériau en poudre (14) à l'intérieur de l'unité de réception (12, S30) soit atteinte ;
la solidification d'au moins une partie du matériau en poudre (14) à l'intérieur de l'unité de réception (12) après que la distribution prédéterminée (50) du matériau en poudre (14) à l'intérieur de l'unité de réception (12, S40) a été atteinte,
le procédé étant **caractérisé en ce qu'**il comprend l'application de l'oscillation (S34) au matériau en poudre (14) introduit dans l'unité de réception (12) au moyen d'un élément d'oscillation introduit au moins partiellement dans le matériau en poudre (14).

2. Procédé selon la revendication 1,
la distribution prédéterminée (50) du matériau en poudre (14) étant une mesure d'une planéité d'une surface exposée (18) du matériau en poudre (14) introduite dans l'unité de réception (12).

3. Procédé selon l'une quelconque des revendications précédentes,
la distribution prédéterminée (50) du matériau en poudre (14) étant une mesure d'une distribution de l'épaisseur de la couche du matériau en poudre (14) introduit dans l'unité de réception (12).

4. Procédé selon l'une quelconque des revendications précédentes, comprenant en outre :
le contrôle si le matériau en poudre (14) à l'intérieur de l'unité de réception (12) a atteint la distribution prédéterminée (50) (S35).

5. Procédé selon l'une quelconque des revendications précédentes, comprenant en outre :
l'application de l'oscillation au matériau en poudre (14) introduit dans l'unité de réception (12) pendant et/ou immédiatement après l'introduction du matériau en poudre (14) dans l'unité de réception (12, S31).

6. Procédé selon l'une quelconque des revendications précédentes,
la distribution prédéterminée (50) du matériau en poudre (14) à l'intérieur de l'unité de réception (12) étant obtenue sans utiliser de lissage mécanique par contact dans la région d'une surface exposée (18) du matériau en poudre (14) introduit dans l'unité de réception (12).

7. Procédé selon l'une quelconque des revendications précédentes, comprenant en outre :
l'application de l'oscillation au matériau en poudre (14) introduit dans l'unité de réception (12) au moyen d'une unité d'oscillation (20, S32) couplée à l'unité de réception (12).

8. Procédé selon l'une quelconque des revendications précédentes, comprenant en outre :
l'application de l'oscillation au matériau en poudre (14) introduit dans l'unité de réception (12) au moyen d'une unité de sortie acoustique (22, S33).

9. Procédé selon l'une quelconque des revendications précédentes, comprenant en outre :
la fixation d'une partie solidifiée du matériau en poudre (14) à l'intérieur de l'unité de réception (12) au moyen d'une unité de fixation (24, S50).

10. Procédé selon l'une quelconque des revendications précédentes, comprenant en outre :
l'introduction d'un volume d'insertion (26) dans l'unité de réception (12), le volume d'insertion (26) étant agencé dans une première région à l'intérieur de l'unité de réception (12), laquelle région diffère d'une deuxième région dans laquelle est agencée la partie du matériau en poudre (14) à solidifier (S1).

11. Appareil (1) pour la fabrication additive d'un composant (10) à l'intérieur d'une unité de réception (12) à l'aide d'un matériau en poudre (14), comprenant :
une unité d'alimentation (16) qui est conçue pour introduire le matériau en poudre (14) dans l'unité de réception (12) ;
un élément d'oscillation, qui est conçu pour appliquer une oscillation au matériau en poudre (14) introduite dans l'unité de réception (12) ;
une unité de commande (30), qui est conçue pour surveiller la distribution actuelle du matériau en poudre (14) introduite dans l'unité de réception (12) et pour maintenir l'oscillation sur le matériau en poudre (14) introduite dans l'unité de réception (12) pendant un certain temps jusqu'à ce que la distribution actuelle du matériau en poudre (14) à l'intérieur de l'unité de réception (12) ait atteint une distribution prédéterminée (50) du matériau en poudre (14) à l'intérieur de l'unité de réception (12) ;
une unité de solidification (28), qui est conçue pour solidifier au moins une partie du matériau en poudre (14) à l'intérieur de l'unité de réception (12) après que la distribution prédéterminée (50) du matériau en poudre (14) à l'intérieur de l'unité de réception (12) a été atteinte, **caractérisée en ce que** l'élément d'oscillation est configuré pour être introduit au moins partiellement dans le matériau en poudre (14).
